(19) **Europäisches Patentamt European Patent Office Office européen des brevets**

(11) **EP 4 148 267 A1**

(12) **EUROPEAN PATENT APPLICATION**
published in accordance with Art. 153(4) EPC

(43) Date of publication:
**15.03.2023 Bulletin 2023/11**

(21) Application number: **21785616.0**

(22) Date of filing: **17.03.2021**

(51) International Patent Classification (IPC):
**F03B 13/26** (2006.01)    **F03B 13/12** (2006.01)
**F03B 3/04** (2006.01)    **F03B 11/02** (2006.01)

(52) Cooperative Patent Classification (CPC):
**F03B 3/04; F03B 11/02; F03B 13/12; F03B 13/26;**
Y02E 10/20; Y02E 10/30

(86) International application number:
**PCT/BR2021/050111**

(87) International publication number:
**WO 2021/203183 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2020  BR 102020007224**

(71) Applicant: **Queiroz, Mauricio**
**11702-700 Praia Grande (BR)**

(72) Inventor: **Queiroz, Mauricio**
**11702-700 Praia Grande (BR)**

(74) Representative: **Carvalho Franco, Isabel**
**J.E. Dias Costa Lda.**
**Rua do Salitre 195**
**1269-063 Lisboa (PT)**

(54) **CURRENT ENERGY COLLECTION UNIT**

(57) The present invention patent relates to a Current Energy Collection Unit (1) which is characterized in that it comprises a reaction turbine (2), which in turn is formed by blades (4) that have an elliptical arc axial profile and that are attached to the axle (5), the geometry of which is an elliptical cap, filling the entire impact zone configured by the flatted projection of the turbine (2), with a tubular enclosure structure (3) that has an internal cross-section and is split into load (6), work (7), discharge (8) and free (9).

FIG. 3

## Description

## Introduction

The present application to a patent of invention relates to a Current Energy Collection Unit, characterized in that it comprises a subsea hydraulic turbine connected to emerged or submerged electric generators, a model of electrical current power as a clean, renewable and sustainable energy source.

Furthermore, it should be pointed out the innovative concept of the Current Structure, which recognizes in the liquid under pressure some of the features of the solid-state matter and also takes into account the solid percentage in the composition of the sea water.

## Field of application

The field of application of the Current Energy Collection Unit is the electric sector, in which the electrical system of the country or of the installation region must absorb the electrical energy produced and adds it to those from the existing sources, enhancing the supply of energy to the commercial distribution; or feeding local and independent electric networks.

## End-of-purpose

The aim of this Current Energy Collection Unit is the capture of the large quantity of kinetic energy associated with extensive blocks of water in the currents of the seas and oceans, and transfer it to electric generators that will transform them into electrical energy for the transmission, distribution and consumption.

## Prior art

In the prior art and as is known in general, one can see on the market models of marine hydraulic turbines that capture and transform the kinetic energy of sea water particles, by means of a unit of time, with mechanical power associated with and proportional to the concept of a Betz Law, since they are based on designs of wind turbines, wherein the combination between quantity, shape and arrangement of the blades allows some of the fluid to flow without interaction through the gaps between the blades, so that the turbines are unable to collect integrally with the energy of the flow both when they are unable to collect the large amount of energy associated with the *current structures.*

## Technological advance

Aiming to inaugurate the technique of capturing energy associated with the current structures, which forms an abundant energy source available for humanity, the Current Energy Collection Unit (1) was developed, as a device whose technical differences settles down consistently:

**[0007]** - In the configuration of the number, format and arrangement of the blades which, in conjunction with the axle of the turbine, have covered the **projection totally opaque to the flow lines** impounting them, in the entirety of the front area, the guided path of travel for the blades, an essential condition for invoking the energy not only of the particles in direct contact with the turbine, but also on all of the particles making up the mass of an upstream structure, referred to as the horizontal **control volume,** characterized by the chemical composition and physical attributes of the sea water, such as pressure, viscosity, compressibility, density and state of matter.

**[0008]** - Replacing the concept of effective mechanical power *P* in the **prior art,** proportional to the area of coverage of the turbine or of the cross-section at the entrance of the load compartment **A** when accompanied by the tubular envelope accessory, given by:

$$P = \frac{\rho \cdot A \cdot v^3}{2}$$

To:

$$P = \frac{c \cdot \rho \cdot R_e^7 \cdot (R_e^3 - R_x^3) \cdot v^3}{(R_t^3 - R_t \cdot R_x^2)^3}$$

Where the concept of mechanical power is proportional to the product of the torque by the angular velocity of the turbine, determined by the particular dimensions thereof such as the radius of the load compartment ($R_e$), the radius of the turbine ($R_t$) and the radius of the base of the axle ($R_x$); by the speed of the current ($v$); the density of the water ($\rho$); and the extension of the structure of the current (c).

**[0010]** - In the form of an elliptical cap of the turbine axle, with a smaller cross-section in the loading zone and greater in the discharge zone, with consequent acceleration of the particles within the working zone, while being pushed in the radial direction to the ends of the blades, resulting in an efficiency gain by means of the speed of torque due to the speed of the product between the drag forces and the increase in the radius of action;

**[0011]** - In the design of the turbine blades whose axial profile is an arc of ellipse, starting in the sense of the current in the load zone, and ending perpendicular to it in the discharge zone, causing a 90° rotation in the sense of the flow, which as a reaction to the Momentum maintenance principle implies the addition of axial forces, favoring the rotation of the turbine.

The traffic in the working compartment in the ordinary direction of the flow is already accelerated as a function of the reduction in the zone of flow section by increasing the turbine volume. However, the flow velocity in this direction is a component of the absolute velocity of the particles because the flow therein travels along the longer path of the arc of the blades, which is expressed in new acceleration, then axial, promoting even more rotation of the turbine;

**[0013]** - The roughness of the surface of the blades when it is intended to increase mechanical efficiency at the expense of longevity, or in the smoothness of the surface of the blades when it is intended to increase longevity at the expense of mechanical efficiency;

**[0014]** - In the natural, autonomous alignment of the turbine perpendicular to the flow, rotating freely on its supporting axis fastened to the base of installation in the ocean floor or to the floating platform on the surface. This functionality allows the system to adjust to variations in the sense of the current due to tidal oscillations, when that's the case.

## DESCRIPTION OF THE DRAWING

To achieve a full and complete visualization of how this Current Energy Collection Unit (1) is formed, which is the subject matter of the present invention as well as the innovative concept of *current structures* as *horizontal control volume,* accompanying the attached non-scale drawings, in which reference is made, as follows:

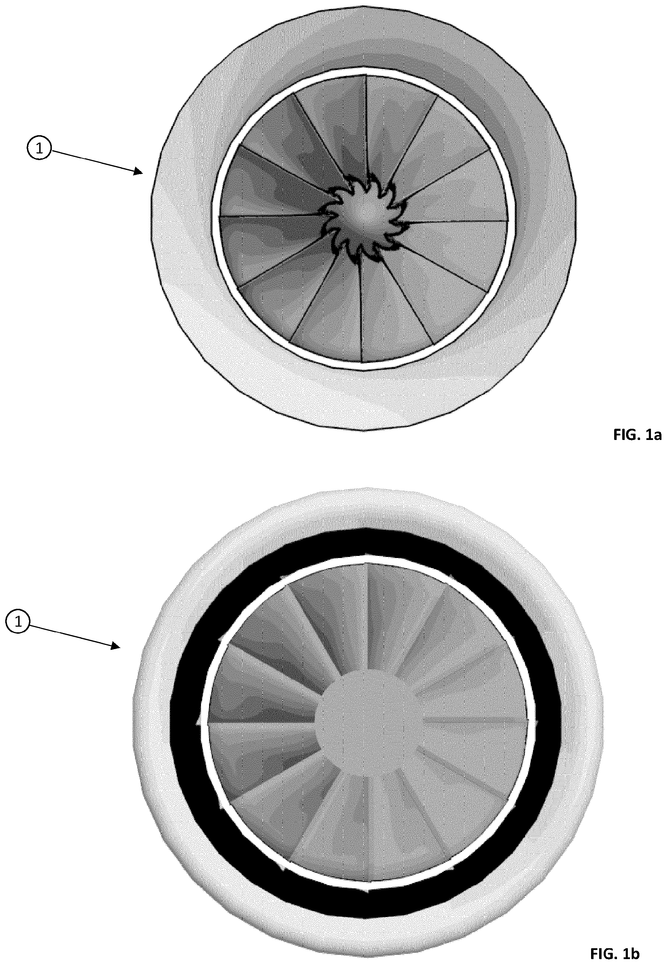

Figure 1a: Corresponds to the total view of the Current Energy Collection Unit (1) in the operation arrangement, in a frontal view.

Figure 1b: Corresponds to the total view of the Current Energy Collection Unit (1) in the operation arrangement, in rear view.

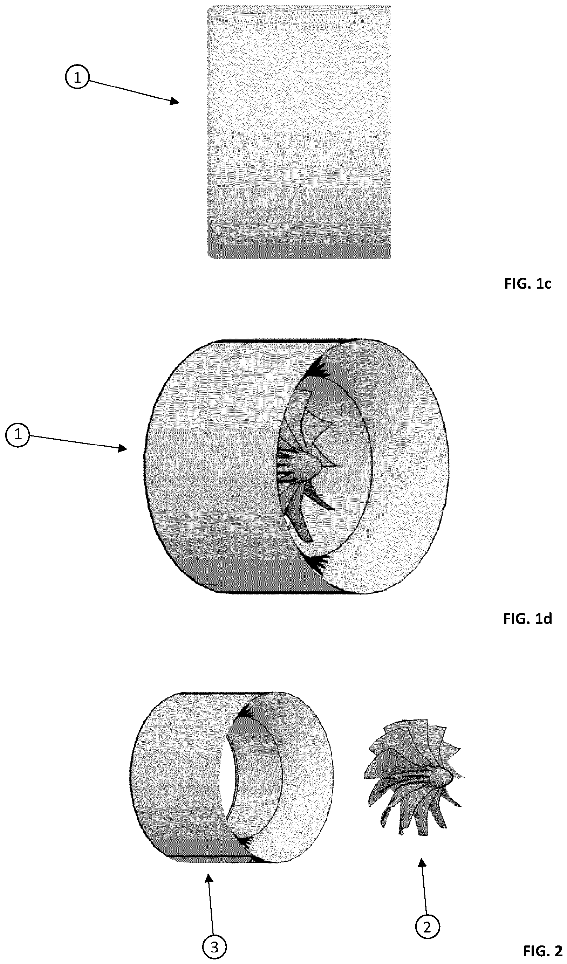

Figure 1c: Corresponds to the total view of the Current Energy Collection Unit (1) in the operation arrangement, in side view.

Figure 1d: Corresponds to the total view of the Current Energy Collection Unit (1) in the operation arrangement, in perspective.

Figure 2: relates to the Current Energy Collection Unit (1), highlighted the turbine (2) and the casing (3).

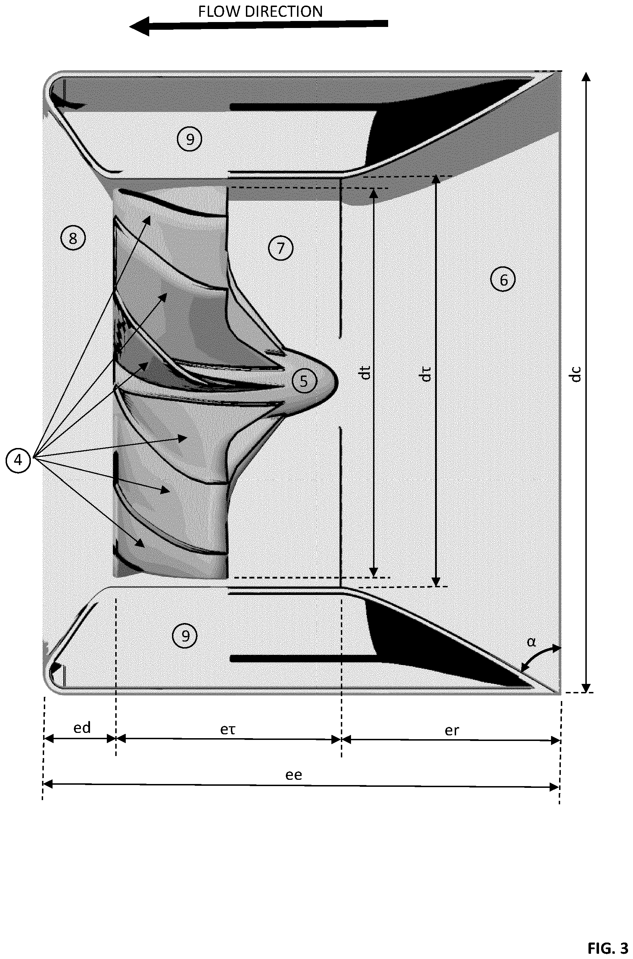

Figure 3: illustrates the longitudinal section, in relation to the sense of the flow, the casing (3), in which the component compartments of the horizontal control volume are highlighted, namely: load (6), work (7), and discharge (8); and the free compartment (9) through which there is no flow. The work compartment (7) comprises the turbine (2) composed of blade (4) and an axle in the form of an elliptical cap (5).

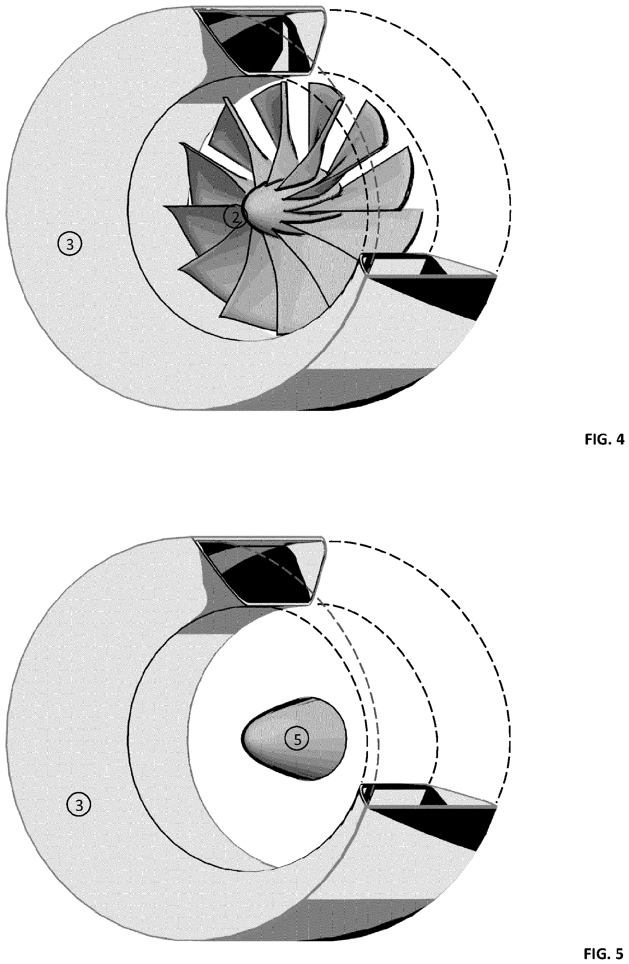

Figure 4: Shows the segment of the casing in perspective (3) with the complete turbine (2) to be compared with Figure 5.

Figure 5: Shows the segment of the casing in perspective (3) with the part of the turbine corresponding to the axle (5), with a view to reducing the cross-sectional area to the current direction.

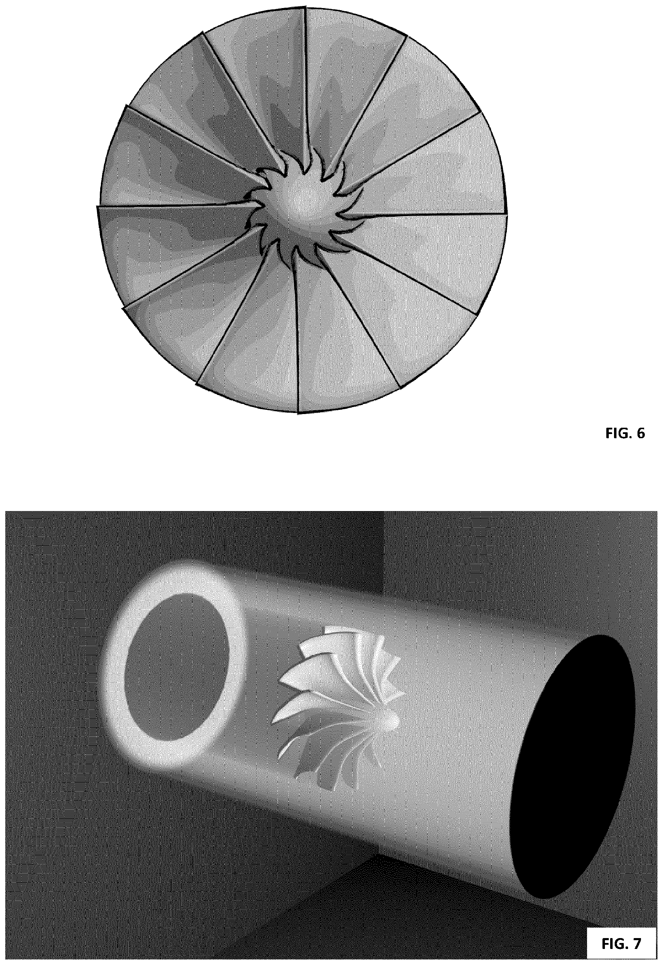

Figure 6: In an orthogonal front view, the obstacle zone is indicated, without any gaps, positioned by the turbine to the flow lines, configured by the number, shape and arrangement of the blades with the axle, i.e., the total opacity through the current, such as an essential condition for capturing the energy associated with the *Current Structures.*

Figure 7: Illustrates, in perspective, the opacity of the turbine, using the concept of parallel rays of light that are analogous to the flow lines. The volume of the light represents the control volume.

Figure 8: Merely conceptual, highlights the volume of control (10) of said flow machine (1) in an installation condition, that is, it relates to the concept of the structure or water block in the upstream current which kinetic energy is associated, and that is renewable by the action of incident forces of the nature at a planetary magnitude, to be converted into electricity before the densely opaque circular area, perpendicular to the natural direction of the flow lines (11), formed by the front perspective of the invention as FIG. 1a.

Figure 9: Shows the frontal view of a single blade (4) with the angle ($\theta$) of coverage thereof, fixed to the axle (5), and projecting on line and point the cutting arc A-B as reference to the scheme shown in FIG. 12.

Figure 10: Highlighted in side view the profile of a single blade (4) fixed to the axle (5).

Figure 11: Highlight in lateral view of the surface of a single blade (4), attached to the axle (5).

Figure 12: Flat layout of the axial profile of the blades (4) referenced in FIG. 9 as cutting A-B, whatever the radial position.

## DESCRIPTION OF THE INVENTION

As can be inferred from the drawings that accompany and form part of this specification, the Current Energy Collector Unit is characterized by being made up of a reaction turbine (2), positioned in the work compartment (7) of the enveloping structure (3).

Constituted by an axle and blades which project the integrity of the circular area parallel to the cross-sectional plane with the current, the turbine (2) is a submerged rotary machine, activated by the consequent force of the ratio between the variation in the amount of movement of the upstream current (10) and the transit time of the fluid particles through the working compartment, and transferring the collected mechanical energy in the process to electrical submerged generators or on platforms on the surface water.

The sense of rotation is unique in order to guarantee the maximum efficiency of energy capture, to be defined in the design of each unit, but must be exclusively clockwise or exclusively anti-clockwise, and is inefficient in reversibility.

The axle (5), of which is an elliptical cap geometry, has the smooth surface support the blades (4) while it receiving from each the torque contribution.

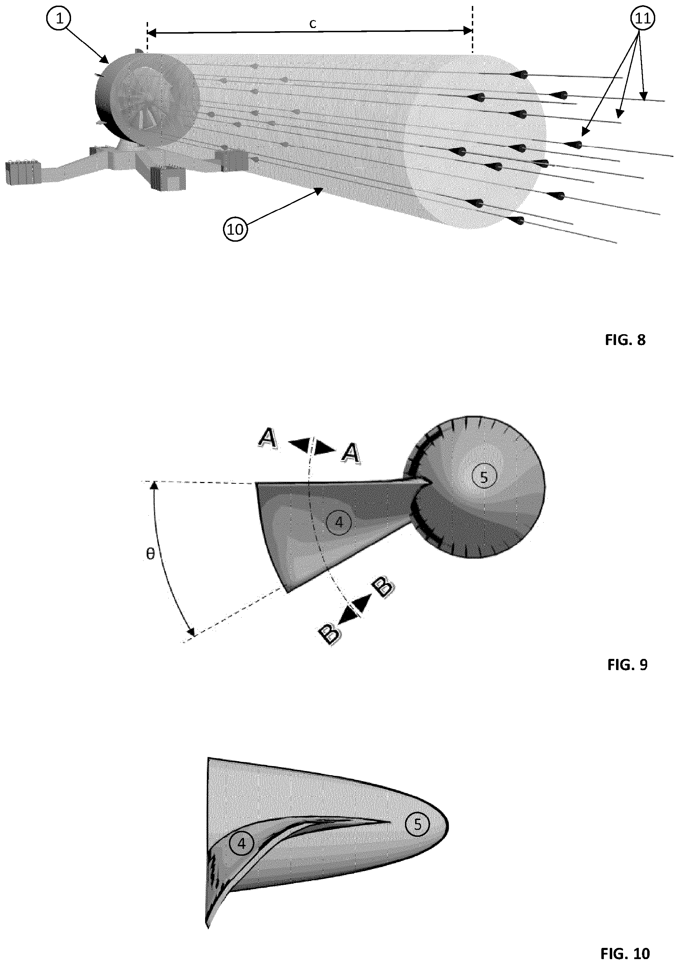

The blades (4) complete the projection of the entire shock zone, i.e., the circular area of the turbine with diameter *dt* parallel to the plane of the cross-section of the current, wherein the number of blades is the ratio between the circumference and the arch ($\theta$) of each blade (Fig. 9), according to the equation:

$$\theta = \frac{360°}{n}$$

Where *n* is the number of blades and $n \in \mathbb{N}$

This feature causes each particle of the seawater that is transported in the current to deflect its path to the direction tangential to the axis, urging the blade reaction in the opposite sense.

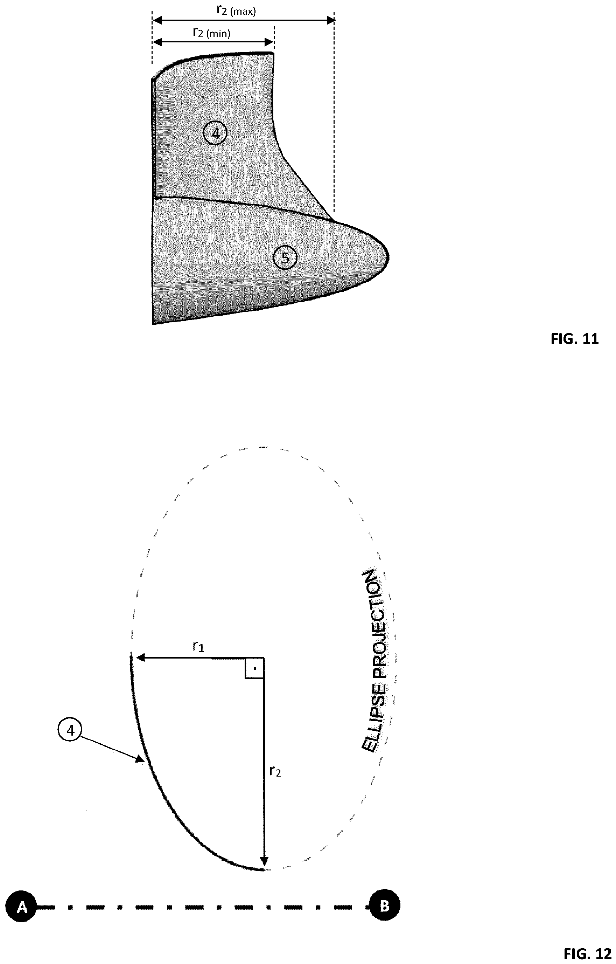

The axial profile of the blades is an ellipse arc of 90° (Fig. 12). $r_1$ and $r_2$ radius vary in accordance with the radial position, the $r_1$ increases regularly from the axis to the edge of the turbine. In turn, the $r_2$ radius, on the contrary, decreases from $r_2$ *max,* on the axis, to $r_2$ *min* to 50% of the radial line towards the edge of the turbine (Fig. 11), in a curve determined by the mechanical strength of the constituent materials of the individual parts and connections of the turbine.

The blades, such as knifes, have the thickness determined by the mechanical strength of the constituent materials, between internal structure and surface, varying according to the effort required.

The turbine has a casing as an accessory that, under the scientific branch of mechanics of continuous environment, meets the principle of conservation of energy, as stated by the Swiss mathematician Daniel Bernoulli. It is a cylindrical tube with diameter *dc* and extension *ee,* the inner side of which tapers to an angle $\alpha$ in the load compartment (6), reducing diameter *dc* through reduction extension *er* to working diameter *dτ*. The working compartment (7) shelters the turbine (2), has the extension *eτ*. The free compartment (9) is the inner region of the envelope where there is no flow, it imposes a reduction in the diameter of the loading compartment for the work compartment. The discharge compartment (8) it paths the flow that has already performed the work to the discharge itself, returning it to the current.

The Current Energy Collection Unit is fully scalable:

- For meeting the individual electrical power goals or the nominal electric power of standardized generators;
- In attention to oceanographic reports pertinent to the installation sites;
- In attention to the mechanical strength of the constituent materials.;

The dimensions are free, as long as they reach the following rules:

- The input diameter of the load compartment (6) is greater than the diameter of the work compartment (7):

$$dc > d\tau$$

- The reduction extension is a function between the reduction angle and the input diameter of the load compartment (6):

$$er = \frac{(dc - d\tau)\tan\alpha}{2}$$

- The diameter of the work compartment (6) is slightly larger than the diameter of the turbine (2), just enough that the turbine can freely rotate without touching the casing (3):

$$d\tau > dt$$

**Conclusion**

The invention relates to an energy collection unit that has been described and illustrated to be a Current Energy Collection Unit, which fits perfectly in the standards governing the patent of invention, and should fill an important gap in the market, deserving for what has been exposed and as a consequence, the respective privilege.

**Claims**

1. Current Energy Collector Unit (1), **characterized in that** it consists of a reaction turbine (2) with a tubular envelope structure (3), so that the flow through this envelope, pushed by the gravitational energy of the entire current, overcomes the obstacle imposed by the formation of a shock area, forcing it to turn.

2. Current Energy Collector Unit (1), according to claim 1, **characterized by** a reaction turbine (2) in which

**EP 4 148 267 A1**

its axle (5) and the blades (4) form a shock area comprising the entirety of the projection. of the turbine in the cross section of the current.

3. The Current Energy Collection Unit (1) according to claim 1, **characterized by** a reaction turbine (2) with blades (4) in which the axial profile is an ellipse arc of 90°, the radius of which vary according to the radial position, wherein r1 is increasing and r2 decreasing from the axis to the edge.

4. The Current Energy Collection Unit (1) according to claim 1, **characterized by** a reaction turbine (2) in which the axle (5) has the geometric of an elliptical cap, having its cross section increasing in the direction of the chain, being smaller in the load zone and larger in the discharge zone.

5. Current Energy Collection Unit (1) according to claim 1, **characterised in that** a tubular enclosure structure, which houses the turbine (2) in the working compartment (7), receives the flow in the load compartment (6) and discharges it in the discharge compartment (8), so that the cross-sectional zone of the flow is reduced in the traffic by the load compartment (6) to the diameter of the working compartment (7) through the occupation by the volume of the free compartment (9).

FIG. 1a

FIG. 1b

FIG. 1c

FIG. 1d

FIG. 2

FLOW DIRECTION

FIG. 3

FIG. 4

FIG. 5

FIG. 6

FIG. 7

FIG. 8

FIG. 9

FIG. 10

$r_{2\,(max)}$

$r_{2\,(min)}$

④

⑤

**FIG. 11**

$r_1$

④

$r_2$

ELLIPSE PROJECTION

A · — · — · — · — · — · B

**FIG. 12**

<table>
<tr><td colspan="2"><strong>INTERNATIONAL SEARCH REPORT</strong></td><td>International application No.<br><strong>PCT/BR2021/050111</strong></td></tr>
</table>

**A. CLASSIFICATION OF SUBJECT MATTER**

**F03B 13/26 (2006.01), F03B 13/12 (2006.01), F03B 3/04 (2006.01), F03B 11/02 (2006.01),**

According to International Patent Classification (IPC) or to both national classification and IPC

**B. FIELDS SEARCHED**

Minimum documentation searched (classification system followed by classification symbols)

**F03B**

Documentation searched other than minimum documentation to the extent that such documents are included in the fields searched

**INPI-BR Base de Dados**

Electronic data base consulted during the international search (name of data base and, where practicable, search terms used)

**Derwent Innovation**

**C. DOCUMENTS CONSIDERED TO BE RELEVANT**

| Category* | Citation of document, with indication, where appropriate, of the relevant passages | Relevant to claim No. |
|---|---|---|
| Y | **US 2005001432 A1 (ROTECH HOLDINGS LIMITED et al. [US])**<br>06 January 2005 (06.01.2005) | 1, 2, 4, 5 |
| A | Fig.2; Abstract | 3 |
| | ------------------------------------------- | |
| Y | **US 2008265583 A1 (ROTECH HOLDINGS LIMITED et al. [US])**<br>30 October 2008 (30.10.2008) | 1, 2, 4, 5 |
| A | Fig.4-5; Abstract | 3 |
| | ------------------------------------------- | |
| Y | **US 532595 A (J. W. SEIVERT & J. W. YOUNG. [US])**<br>15 January 1895 (15.01.1895) | 1, 2, 4, 5 |
| A | The whole document | 3 |
| | ------------------------------------------- | |
| Y | **US 2009047131 A1 (B N BALANCE ENERGY SOLUTIONS LLC [US])** | 1, 2, 4, 5 |
| A | 19 February 2009 (19.02.2009)<br>Abstract; Figures | 3 |
| | ------------------------------------------- | |

[X] Further documents are listed in the continuation of Box C.     [X] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 June 2021 (07.06.2021) | 16 June 2021 (16.06.2021) |

| Name and mailing address of the ISA/ **BR** | Authorized officer |
|---|---|
| Facsimile No. | Telephone No. |

Form PCT/ISA/210 (second sheet) (January 2015)

| | **INTERNATIONAL SEARCH REPORT** | International application No. |
|---|---|---|
| | | **PCT/BR2021/050111** |

| C (Continuation). DOCUMENTS CONSIDERED TO BE RELEVANT | | |
|---|---|---|
| Category* | Citation of document, with indication, where appropriate, of the relevant passages | Relevant to claim No. |
| A | **WO 2009126995 A1 ( PIELACH PETER [SG])**<br>22 October 2009 (22.10.2009)<br>Abstract; Figures<br>------------------------------------------- | 1 a 5 |
| A | **US 7874788 B2 (CLEAN CURRENT LTD PARTNERSHIP [CA])**<br>25 January 2011 (25.01.2011)<br>Abstract; Figures<br>------------------------------------------- | 1 a 5 |
| A | **KR 20130126883 A (JEONG GYU HWA [KR])**<br>21 November 2013 (21.11.2013)<br>Abstract; Figures<br>------------------------------------------- | 1 a 5 |
| A | **US 6168373 B1 ( VAUTHIER PHILIPPE [US])**<br>02 January 2001 (02.01.2001)<br>The whole document<br>------------------------------------------- | 1 a 5 |
| A | **US 5440176 A (HAINING MICHAEL L [US])**<br>08 August 1995 (08.08.1995)<br>The whole document<br>------------------------------------------- | 1 a 5 |

Form PCT/ISA/210 (continuation of second sheet) (January 2015)

INTERNATIONAL SEARCH REPORT
Information on patent family members

International application No.

**PCT/BR2021/050111**

| | | | |
|---|---|---|---|
| US 2005001432 A1 | 2005-01-06 | US 7768145 B2 | 2010-08-03 |
| | | AT 449909 T | 2009-12-15 |
| | | AU 2002334099 B2 | 2009-03-05 |
| | | AU 2009202276 A1 | 2009-07-02 |
| | | CA 2462847 A1 | 2003-04-10 |
| | | CN 1599838 A | 2005-03-23 |
| | | CN 101666284 A | 2010-03-10 |
| | | CN 102052230 A | 2011-05-11 |
| | | DE 60234528 D1 | 2010-01-07 |
| | | EP 1436504 A1 | 2004-07-14 |
| | | EP 2063103 A2 | 2009-05-27 |
| | | GB 0123802 D0 | 2001-11-21 |
| | | GB 0223062 D0 | 2002-11-13 |
| | | GB 2382627 A | 2003-06-04 |
| | | GB 0503268 D0 | 2005-03-23 |
| | | GB 2408294 A | 2005-05-25 |
| | | GB 0520396 D0 | 2005-11-16 |
| | | GB 2416809 A | 2006-02-08 |
| | | JP 2005504227 A | 2005-02-10 |
| | | JP 2009115098 A | 2009-05-28 |
| | | NO 20041465 L | 2004-06-01 |
| | | NO 329957 B1 | 2011-01-31 |
| | | NZ 532286 A | 2006-08-31 |
| | | US 2009179425 A1 | 2009-07-16 |
| | | US 7944073 B2 | 2011-05-17 |
| | | WO 03029645 A1 | 2003-04-10 |
| US 2008265583 A1 | 2008-10-30 | US 8115329 B2 | 2012-02-14 |
| | | AT 538306 T | 2012-01-15 |
| | | AU 2006250972 A1 | 2006-11-30 |
| | | CA 2609014 A1 | 2006-11-30 |
| | | CN 101223355 A | 2008-07-16 |
| | | EP 1886015 A1 | 2008-02-13 |
| | | GB 0510417 D0 | 2005-06-29 |
| | | GB 0609832 D0 | 2006-06-28 |
| | | GB 2426295 A | 2006-11-22 |
| | | GB 201102602 D0 | 2011-03-30 |
| | | GB 2475196 A | 2011-05-11 |
| | | JP 2008540928 A | 2008-11-20 |
| | | KR 20080018184 A | 2008-02-27 |
| | | KR 101333762 B1 | 2013-11-28 |
| | | NO 20075941 L | 2008-02-19 |
| | | NZ 564539 A | 2011-04-29 |
| | | WO 2006125959 A1 | 2006-11-30 |
| | | ZA 200710394 B | 2008-10-29 |
| US 532595 A | 1895-01-15 | None | |
| US 2009047131 A1 | 2009-02-19 | US 7997870 B2 | 2011-08-16 |
| | | AU 2008287263 A1 | 2009-02-19 |
| | | CN 101828014 A | 2010-09-08 |
| | | EP 2179156 A1 | 2010-04-28 |
| | | JP 2010537100 A | 2010-12-02 |

Form PCT/ISA/210 (patent family annex) (January 2015)

INTERNATIONAL SEARCH REPORT
Information on patent family members

International application No.

**PCT/BR2021/050111**

|  |  |  |  |
|---|---|---|---|
|  |  | WO 2009023367 A1 | 2009-02-19 |
| ------------------------------ | ---------------- | ------------------------------ | ---------------- |
| WO 2009126995 A1 | 2009-10-22 | AU 2009238205 A1 | 2009-10-22 |
|  |  | CA 2724702 A1 | 2009-10-22 |
|  |  | CL 2009000891 A1 | 2010-03-05 |
|  |  | CN 102066667 A | 2011-05-18 |
|  |  | EP 2304110 A1 | 2011-04-06 |
|  |  | KR 20100135907 A | 2010-12-27 |
|  |  | KR 101292832 B1 | 2013-08-02 |
|  |  | US 2012013129 A1 | 2012-01-19 |
|  |  | US 8633609 B2 | 2014-01-21 |
|  |  | US 2014125062 A1 | 2014-05-08 |
| ------------------------------ | ---------------- | ------------------------------ | ---------------- |
| US 7874788 B2 | 2011-01-25 | US 2007284884 A1 | 2007-12-13 |
|  |  | AU 2005284617 A1 | 2006-03-23 |
|  |  | CA 2481820 A1 | 2006-03-17 |
|  |  | CA 2549376 A1 | 2006-03-23 |
|  |  | CA 2640643 A1 | 2006-03-17 |
|  |  | CN 101023264 A | 2007-08-22 |
|  |  | EP 1789676 A1 | 2007-05-30 |
|  |  | JP 2008513650 A | 2008-05-01 |
|  |  | KR 20070058620 A | 2007-06-08 |
|  |  | NO 20071909 L | 2007-04-16 |
|  |  | NZ 553511 A | 2010-10-29 |
|  |  | US 2011115228 A1 | 2011-05-19 |
|  |  | WO 2006029496 A1 | 2006-03-23 |
| ------------------------------ | ---------------- | ------------------------------ | ---------------- |
| KR 20130126883 A | 2013-11-21 | None |  |
| ------------------------------ | ---------------- | ------------------------------ | ---------------- |
| US 6168373 B1 | 2001-01-02 | AT 406503 T | 2008-09-15 |
|  |  | AU 1549802 A | 2002-04-08 |
|  |  | AU 778856 B2 | 2004-12-23 |
|  |  | AU 5123500 A | 2001-01-02 |
|  |  | CA 2370980 A1 | 2000-10-07 |
|  |  | DE 60040095 D1 | 2008-10-09 |
|  |  | EP 1268983 A1 | 2003-01-02 |
|  |  | ES 2313913 T3 | 2009-03-16 |
|  |  | US 2002088222 A1 | 2002-07-11 |
|  |  | WO 0077393 A1 | 2000-12-21 |
|  |  | WO 0227151 A1 | 2002-04-04 |
| ------------------------------ | ---------------- | ------------------------------ | ---------------- |
| US 5440176 A | 1995-08-08 | AU 3423895 A | 1996-05-02 |
|  |  | AU 687629 B2 | 1998-02-26 |
|  |  | CA 2160756 A1 | 1996-04-19 |
|  |  | EP 0708241 A2 | 1996-04-24 |
|  |  | JP H08210237 A | 1996-08-20 |
|  |  | KR 960016078 A | 1996-05-22 |
|  |  | NO 954156 D0 | 1995-10-18 |
| ------------------------------ | ---------------- | ------------------------------ | ---------------- |

Form PCT/ISA/210 (patent family annex) (January 2015)